# DEMANDE DE BREVET EUROPEEN

(11) **EP 1 401 195 A1**
(43) Date de publication de la demande: **24.03.2004**
(21) Numéro de dépôt: 03292239.5
(22) Date de dépôt: 11.09.2003
(51) Int. Cl.: H04N 5/00, H04N 5/44

(54) **Dispositif et procédé de routage de données vidéo**

(30) Priorité: 19.09.2002 FR 0211616
(71) Demandeur: STMicroelectronics S.A., 92120 Montrouge (FR)
(72) Inventeur: Tournier, Christian, 38170 Seyssinet (FR)
(74) Mandataire: Bentz, Jean-Paul

(57) **Abrégé**

Le dispositif comprend un réseau (L1-L13, C1-C4) assurant le routage desdites données vers des moyens de démultiplexage (18) via au moins un module de décryptage (6-1, 6-2).

Il est caractérisé par le fait que le réseau comprend des moyens de connexion à une pluralité de voies indépendantes de démodulation (12-1, 12-2), chacune produisant des données numériques, le réseau permettant d'assurer individuellement un routage de données numériques issues de chaque voie de démodulation vers les moyens de démultiplexage (18) via au moins un module de décryptage (6-1, 6-2).

Ces deux voies de démodulation peuvent ainsi traiter des signaux numériques appartenant à différents multiplexes.

Exemples d'application : récepteurs de télévision numérique à incrustation d'image, à enregistreur combiné avec téléviseur.

## Description

L'invention concerne la gestion de signaux de télévision numérique côté réception, avantageusement dans le contexte d'un système à décryptage assuré par des modules dits "d'interface commune" (abréviation IC), connus également par le terme anglais de "common interface (abréviation CI) modules", opérant selon un protocole normalisé.

Le développement du traitement de signal sous forme numérique dans le domaine de la télévision, ainsi que l'avènement des techniques d'encryptage pour les chaînes à péage, ont donné lieu à la notion d'une interface commune destinée à être normalisée et déployée à une échelle continentale.

Dans ce cadre, il est prévu de permettre à des téléspectateurs (désignés ci-après "utilisateurs") de disposer d'un large éventail de chaînes de télévision (ou de stations de radio) à péage provenant de différents opérateurs. Les signaux vidéo numériques des chaînes à péage sont transmis sous forme encryptée, leur décryptage s'effectuant au niveau d'un démodulateur côté réception. A cette fin, le démodulateur est piloté par une unité d'interface qui permet de décrypter sélectivement une chaîne, un bouquet de chaînes, ou un programme ponctuel par des codes gérés au moyen d'une carte à puce ou analogue personnalisée à l'utilisateur en fonction d'un abonnement.

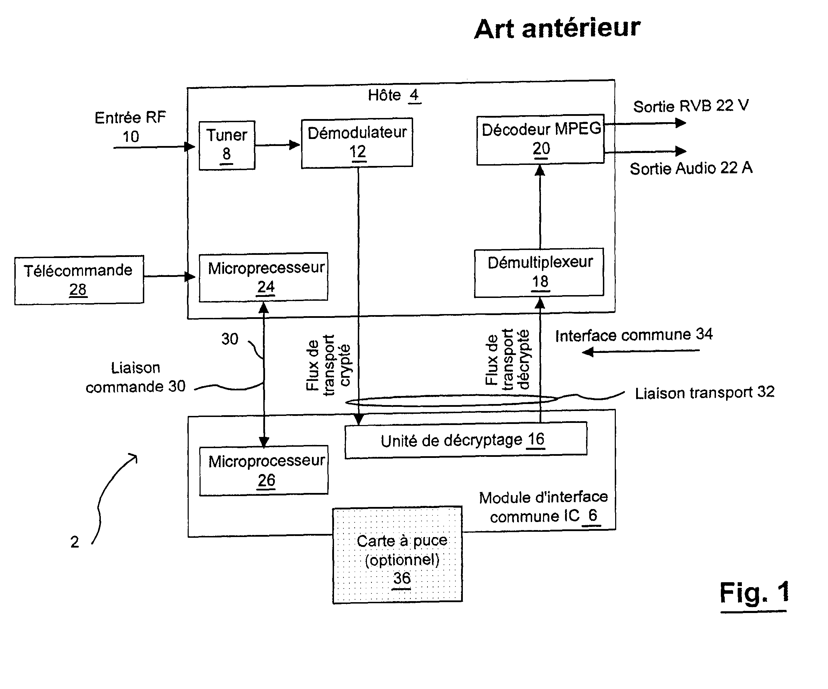

Les éléments fonctionnels qui interviennent côté réception pour gérer le flux données numériques entre une entrée de signaux numériques, éventuellement encryptés, et une sortie audio/vidéo vers un téléviseur sont représentés à la figure 1.

L'ensemble 2 de ces éléments est partagé en deux groupes principaux :
- un hôte 4, qui assure le traitement des signaux depuis l'entrée de réception, jusqu'à la sortie vers le téléviseur, hormis les aspects spécifiques au décryptage, et
- au moins un module dit "d'interface commune" 6 (un seul est représenté à la figure 1) , qui assure le décryptage des signaux.

L'hôte 4 comprend un tuner 8 qui reçoit en entrée des signaux numériques modulés (signaux RF) 10, provenant par exemple d'une tête de parabole satellite ou d'un terminal de câble, et y extrait sélectivement les signaux d'un canal pour les transmettre à un démodulateur 12. Ce dernier extrait du signal modulé relatif au canal sélectionné le flux de données numériques audio et vidéo. Lorsque ces données sont encryptées, ce qui est le cas pour une chaîne à péage, elles doivent subir un décryptage avant de pouvoir être exploitées. A cette fin, les données numériques sont transmises sous forme de flux dit de "transport encrypté" vers l'entrée d'une unité de décryptage 16 de l'interface commune 6, où elles y sont décryptées et ensuite envoyées en entrée d'un démultiplexeur 18 de l'hôte 4.

Dans l'exemple, les données en sortie du démultiplexeur sont sous forme compressée à la norme "MPEG", et sont donc décompressées par un décodeur MPEG 20 qui produit en sortie les composantes vidéo 22V sous forme de signaux rouge, vert, bleu (RVB) et audio 22A aux entrées correspondantes du téléviseur pour reproduire l'image avec le son.

L'hôte 4 et le module d'interface 6 sont chacun gérés par leur propre microprocesseur (respectivement 24 et 26), celui de l'hôte répondant à des commandes émises par l'utilisateur via une télécommande 28. Par ailleurs, les deux microprocesseurs 24, 26 communiquent entre eux sur une liaison de commande 30. L'hôte 4 est ainsi relié au module d'interface 6 par deux types de liaisons sur des bus respectifs : le bus de commande 30, qui assure la gestion interne à l'ensemble, et le bus 32, dit de transport, qui assure l'aller-retour des données respectivement avant et après décryptage.

La gestion des bus 30 et 32 est régie par une interface commune 34, qui comprend un module logiciel permettant de normaliser et de contrôler les échanges entre l'hôte 4 et chaque module d'interface 6.

Les données personnalisées relatives au décryptage sont contenues dans une carte mémoire informatique ou une carte à puce 36 pouvant s'insérer dans un lecteur prévu à cet effet dans le module d'interface 6.

La mise en oeuvre de l'interface commune 6 est régie par un protocole qui spécifie d'une part des aspects matériels, tels que le type de connecteur (généralement au format "PCMCIA" ou "PCCard") qui le relie à l'hôte 4 et les débits que doivent supporter les deux bus 30 et 32, et d'autre part des aspects logiciels associés à la gestion de ce type de module, tels que le mode de dialogue entre hôte et module d'interface, les procédures de connexion et de déconnexion, etc.

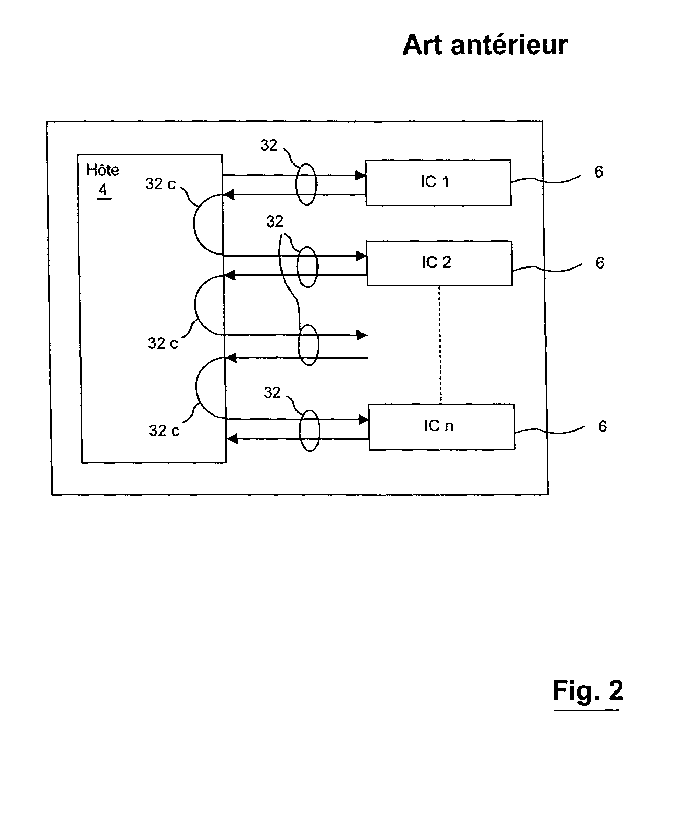

A titre indicatif, la norme précise que lorsque l'on prévoit la possibilité de relier plus d'un module d'interface 6 à l'hôte 4, l'interface de la liaison de transport (bus 32) doit être reliée en série successivement à travers chacun des modules, comme le montre schématiquement la figure 2.

Dans cette représentation, l'hôte 4 est relié à un nombre n de modules d'interface commune 6, désignés IC1-ICn, chacun avec sa propre liaison de transport. aller-retour 32. La connexion "retour" (transportant les données décryptées) d'un module est en plus reliée à la connexion "aller" (portant les données encryptées) du module qui lui est adjacent, grâce à une connexion interne 32-c qui assure la concaténation entre ces deux modules. Cette concaténation est répétée de manière analogue avec chaque paire de modules adjacents pour relier séquentiellement tous les modules, avec la connexion "retour" du précédant module relié à la connexion "aller" du suivant. Une fonction de contour ou de déviation est prévue pour chaque module, permettant de contourner un ou chaque module absent ou non utilisé pour accéder à un autre.

L'hôte 4 doit par ailleurs maintenir les connexions d'interface de commande de chaque module. d'interface commune 6 à la fois séparées et accessibles en simultané, de sorte que des transactions entre l'hôte et le module puissent être traitées indépendamment pour chaque module. Lorsqu'un module d'interface commune 6 est retiré, la couche de transport de l'interface de commande reliant tout autre module ne doit être ni perturbée, ni interrompue.

Lorsque plusieurs modules d'interface 6 sont reliés à un hôte 4, ce dernier doit pouvoir sélectionner le ou chaque module nécessaire pour le décryptage du ou de chaque service sélectionné.

Conformément à la norme, la couche de transport de l'interface de commande fonctionne au-dessus de la couche "lien" fournie par la mise en oeuvre physique choisie.

Le protocole de transport est du type commande-réponse, où l'hôte 4 envoi une commande au module d'interface 6 au moyen d'une unité de données de protocole de transport de commande (abréviation anglaise C_TPDU), et attend une réponse du module au moyen d'une unité de données de protocole de transport réponse (abréviation anglaise R_TPDU). Le module ne peut pas initier des communications ; il doit attendre que l'hôte l'y ait invité, ou doit d'abord lui envoyer des données.

La communication de données à travers l'unité d'interface est définie en termes d'objets. Les objets sont codés au moyen d'un codage dit "Tag-Length-Value" (valeur de longueur d'étiquette), dérivé du codage utilisé pour la syntaxe dite ASN.1.

La couche application met en oeuvre une série de protocoles basés sur la notion d'une ressource. Une ressource définit une unité de fonctionnalité qui est disponible aux applications exécutées sur un module. Pour qu'elle puisse être utilisée, chaque ressource supporte un ensemble d'objets et un protocole pour les échanger mutuellement entre ressources. La communication avec la ressource s'effectue lors d'une session créée pour la ressource en question.

Il s'avère que les systèmes de décryptage sont généralement non-compatibles entre les différentes sociétés qui proposent des services payants, ces sociétés étant concurrentes. Il est cependant souhaitable pour l'utilisateur que les différents systèmes d'encryptage utilisés lui soient transparents, moyennant la connexion de deux modules d'interface ou plus sur l'hôte, chacun dédié à un système de cryptage donné, ce qui permet notamment l'accès simultané à plusieurs services. La possibilité de connecter au moins deux modules est aussi attrayante pour l'utilisateur ne regardant qu'une seule source à un instant donné, car il n'aura ainsi pas besoin d'interchanger physiquement les modules en passant d'un service à un autre provenant de sources concurrentes.

Pour plus de détails concernant les spécificités de la normalisation dans le contexte européen, on peut se référer à la publication "DVB Document A017" intitulé "Common Interface for Conditional Access and Other Digital Video Broadcasting Decoder Applications" (Interface commune pour l'accès conditionnel et autres applications de décodage en télédiffusion numérique), dont le contenu est intégré à la présente demande implicitement par référence.

Jusqu'à présent, les normes et les solutions proposées ne s'adressent qu'à des systèmes à un seul démodulateur 12, ce dernier étant associé à un ou à plusieurs modules d'interface 6, ainsi qu'expliqué dans les paragraphes qui précèdent.

On rappelle que conformément aux protocoles d'émission de signaux en TV numérique, les signaux sont diffusés sous forme de "multiplex". Chaque multiplex comporte les données complètes (vidéo et audio) d'un ensemble de plusieurs chaînes (c'est-à-dire des canaux) différentes, typiquement cinq chaînes. Un seul démodulateur 18 peut traiter en parallèle un nombre quelconque de chaînes d'un multiplex, mais seulement un multiplex à la fois.

On peut donc prévoir plusieurs modules d'interface 6 pour assurer le décryptage de plusieurs chaînes provenant d'un même multiplex. En effet, les chaînes d'un même multiplex ne sont pas forcément cryptées de la même manière, pouvant provenir par exemple de sociétés différentes. Les différents modules d'interface 6 permettent alors à l'utilisateur d'exploiter en parallèle différentes chaînes d'un même multiplex.

A titre d'exemple, le document brevet WO-A-00. 77650 propose une architecture de connexion de plusieurs modules d'interface sur un démodulateur unique, permettant de gérer automatiquement l'interconnexion de ce dernier avec l'un des modules. Plus particulièrement, ce document prévoit des moyens de reconnaissance automatique des modules d'interface une fois qu'ils sont insérés dans leur connecteur, et des moyens de commande d'aiguillage permettant d'interchanger les cheminements du flux de données entre l'hôte et les modules.

Une des limitations majeures de l'état de la technique ne gérant qu'un seul démodulateur apparaît lorsqu'il est nécessaire d'exploiter simultanément des sources audio/vidéo (des canaux) ne provenant pas d'un même multiplex. Comme exemples d'applications nécessitant de traiter en simultané deux sources audio/vidéo séparées, voire plus, on peut citer :
- la fonction d'incrustation d'image, aussi connue par l'acronyme PIP (de l'anglais "picture in picture"), où le téléviseur affiche sur écran une image principale provenant d'une chaîne, et en même temps au moins une autre image qui apparaît en incrustation sur une partie seulement de l'écran, et
- les appareils qui réunissent un téléviseur et un enregistreur magnétoscope et/ou DVD (désignés communément par le terme "combo"), le téléviseur et l'enregistreur possédant chacun au moins un démodulateur pour assurer un fonctionnement indépendant (notamment pour la visualisation d'une chaîne et enregistrement simultanée d'une autre).

Or, étant donné le nombre de chaînes disponibles et susceptibles d'intéresser un même utilisateur, il arrive fréquemment que différentes chaînes à traiter ainsi en simultané ne se trouvent pas sur le même multiplex.

Au vu de ce qui précède, l'invention propose une mise en oeuvre d'une interface commune permettant de gérer indépendamment plusieurs voies de démodulation mutuellement indépendantes, de manière à permettre de traiter en simultané des chaînes de différents multiplexes. Les sorties des voies de démodulation peuvent être acheminées pour traitement par un ou plusieurs modules d'interface, et ce de manière transparente pour l'utilisateur.

Plus particulièrement, l'invention propose, selon un premier objet, un dispositif de routage destiné au transport de données vidéo numériques provenant de signaux de télévision numérique démodulés, le dispositif comprenant un réseau assurant le routage desdites données vers des moyens de démultiplexage via au moins un module de décryptage,
caractérisé en ce que le réseau comprend des moyens de connexion à une pluralité de voies indépendantes de démodulation, chacune produisant des données numériques, le réseau permettant d'assurer individuellement un routage de données numériques issues de chaque voie de démodulation vers les moyens de démultiplexage via au moins un module de décryptage.

Avantageusement, le dispositif est destiné à se relier à plusieurs modules de décryptage, le réseau comprenant des moyens de connexion permettant de relier l'une quelconque des voies de démodulation vers l'un quelconque des modules de décryptage.

Lorsque le réseau gère une pluralité de modules de décryptage, le réseau peut comprendre des moyens de connexion pour assurer un routage des signaux numériques en passant par plusieurs modules de décryptage successifs selon un ordre arbitraire, c'est-à-dire pouvant être sélectionné lors de la gestion.

Dans le mode de réalisation préféré, lorsque le dispositif gère une pluralité de modules de décryptage reliés entre eux en chaîne, le réseau peut comprendre des moyens de connexion permettant de sélectionner, pour au moins deux de ces modules de décryptage, le sens de cheminement de données numériques dans la chaîne, c'est-à-dire permettant au choix un cheminement dans un premier sens ou dans le sens inverse au premier sens dans la chaîne.

Le réseau peut comprendre des moyens de connexion destinés à se relier à une pluralité d'entrées de données des moyens de démultiplexage, chacune pouvant recevoir indépendamment des données ayant pour origine l'une quelconque des voies de démodulation.

Le dispositif peut exécuter les routages en réponse à des commandes provenant d'un dispositif hôte assurant la gestion de la démodulation des signaux numériques, du décryptage des données numériques et du démultiplexage des données.

Selon un deuxième aspect, l'invention concerne un dispositif hôte pour la gestion en réception de signaux de télévision numérique, le dispositif étant associé à au moins un module de décryptage (6-1, 6-2),
caractérisé en ce qu'il comprend :
- un dispositif de routage selon le premier objet précité,
- au moins deux voies indépendantes de démodulation reliées fonctionnellement au dispositif de routage pour fournir indépendamment des données numériques démodulées issues de canaux respectifs, et
- un processeur permettant d'attribuer chaque canal actif à une voie de démodulation respective et à au moins un module de décryptage, et pour commander au dispositif de routage le routage des données de chaque canal depuis la voie de démodulation attribuée vers le ou chaque module de décryptage attribué et vers une entrée des moyens de démultiplexage.

Le dispositif hôte peut comprendre en outre une table d'attribution stockée en mémoire permettant d'identifier, pour chaque canal répertorié : i) le ou les voies de démodulation à attribuer et ii) le ou les modules de décryptage à attribuer.

Le dispositif hôte peut gérer simultanément des signaux provenant d'au moins deux canaux actifs, chaque canal étant traité par une voie de démodulation respective, les données démodulées de chaque canal étant fournies simultanément à des entrées respectives des moyens de démultiplexage.

Les au moins deux canaux actifs peuvent être issus de multiplexes de transmission de signaux de télévision numérique mutuellement différents.

Dans le mode de réalisation envisagé, au moins un module de décryptage est un module dit "d'interface commune" répondant à une norme établie de la télévision numérique.

Selon un troisième aspect, l'invention concerne un récepteur de signaux de télévision numérique comprenant un téléviseur combiné avec un enregistreur, permettant simultanément de reproduire sur écran des signaux provenant d'un canal et d'enregistrer des signaux provenant d'un autre canal, caractérisé en ce qu'il comprend un dispositif hôte selon le deuxième objet ) précité.

Selon un quatrième aspect, l'invention concerne un récepteur de signaux de télévision numérique ayant une fonction d'incrustation d'image selon laquelle deux images provenant de canaux différents peuvent être affichées simultanément, caractérisé en ce qu'il comprend un dispositif hôte selon le deuxième objet précité.

Selon un cinquième aspect, l'invention concerne un procédé de routage destiné au transport de données vidéo numériques provenant de signaux de télévision numérique démodulés, le procédé mettant en oeuvre un réseau assurant le routage des données vers des moyens de démultiplexage via au moins un module de décryptage,
caractérisé en ce qu'il consiste à relier les moyens de connexion à une pluralité de voies indépendantes de démodulation produisant des données numériques, et à assurer individuellement un routage de données numériques issues de chaque voie de démodulation vers les moyens de démultiplexage via au moins un module de décryptage.

Les aspects de l'invention évoqués supra dans le cadre du dispositif de routage, du dispositif hôte, ou du téléviseur, s'appliquent mutatis mutandis à ce procédé.

Selon un sixième aspect, l'invention concerne une mise en oeuvre de ce procédé pour la gestion simultanée d'au moins un premier et un deuxième canal de signaux de télévision numérique modulés, les données du premier canal étant destinées à l'affichage sur écran d'une image principale, les données du deuxième canal étant destinées à l'affichage d'une image en incrustation sur l'image principale.

Selon un septième aspect, l'invention concerne une mise en oeuvre du procédé pour la gestion simultanée d'au moins un premier et un deuxième canal de signaux de télévision numérique modulés, les données du premier canal étant destinées à l'affichage en temps réel sur écran, les données du deuxième canal étant destinées à un enregistrement sur support d'enregistrement.

Selon un huitième aspect, l'invention concerne une mise en oeuvre du procédé pour la gestion simultanée d'au moins un premier et un deuxième canal de signaux de télévision numérique modulés, les premier et deuxième canaux de données numériques appartenant à des multiplexes de transmission de signaux de télévision numérique mutuellement différents.

L'invention et les avantages qui en ressortent apparaîtront plus clairement à la lecture de la description qui suit des modes de réalisation préférés, donnée purement à titre d'exemples non-limitatifs, par référence aux dessins annexés dans lesquelles :
- la figure 1, déjà décrite, est un schéma synoptique d'un ensemble constitué d'un hôte et d'un module d'interface conformément à la norme d'interface commune pour la télévision numérique,
- la figure 2, déjà décrite, est un schéma simplifié montrant le principe de connexion en série par concaténation de plusieurs modules d'interface commune sur un hôte, et
- la figure 3 est un schéma bloc d'un mode de réalisation de l'invention, montrant l'architecture d'un hôte d'un système de réception de télévision numérique, permettant de gérer plusieurs démodulateurs conformément à l'invention.

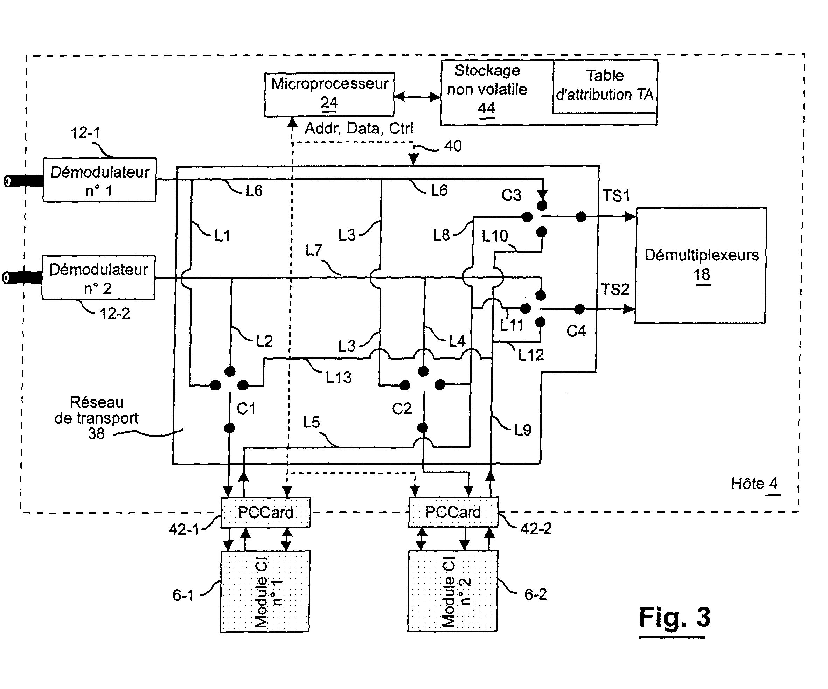

La figure 3 représente, sous forme de schéma bloc, une architecture d'hôte 4 selon un mode de réalisation de l'invention, destiné à la réception et à la gestion de signaux de télévision numérique dans le cadre de la norme DVB-CI (de l'anglais "digital video broadacast - common interface"). L'hôte 4 est du type multi-module et, conformément à l'invention, gère plusieurs entrées de canaux indépendants (provenant de multiplexes respectifs) en mode simultanée. Chaque canal géré est produit en sortie d'un démodulateur respectif 12-1, 12-2 (deux dans l'exemple), chacun pouvant être relié à un ensemble de démultiplexeurs 18, soit via un ou plusieurs modules d'interface commune 6-1, 6-2 (deux dans l'exemple), soit directement. Ces démultiplexeurs sont aussi connus dans ce contexte par le terme anglais de "dual transport stream controller" (contrôleur de double flux de transport).

Les modules de décryptages 6-1, 6-2 sont adressables par le microprocesseur 24 de l'hôte 4 pour sélectionner un canal spécifié à démoduler sur un multiplex donné. Le transport du flux de données des démodulateurs 12-1 et 12-2 vers les démultiplexeurs 18. est assuré par un réseau de transport (dispositif de routage) 38 géré par le microprocesseur 24 de l'hôte 4 au moyen de signaux sur un bus de type adresse-donnée-contrôle 40 (lignes pointillées), qui assure également la commande des deux modules d'interface commune 6-1 et 6-2.

Les deux modules d'interface commune 6-1 et 6-2 sont logées de manière amovible dans le boîtier de l'hôte au moyen de connecteurs respectifs 42-1 et 42-2 au format "PCCard".

Le microprocesseur 24 de l'hôte échange des données avec une mémoire de stockage non volatile 44 du type EEPROM ou analogue. Cette mémoire contient notamment diverses données de configuration, établies selon des choix de services et/ou d'installation de chaînes. En particulier, la mémoire 44 contient une table dite d'attribution TA, établie lors de l'installation du téléviseur par l'utilisateur. Cette table TA sert entre autres à répertorier explicitement les différents paramètres associés à chacun des canaux stockés au niveaux de démodulateurs 12-1 et 12-2, dont l'attribution :
- du tuner (c'est-à-dire le démodulateur 12-1 ou 12-2) qui doit être utilisé pour la réception du canal concerné dans un mode de fonctionnement donné : par exemple pour extraire une image à incruster sur l'écran, ou pour l'enregistrement d'une émission, etc. ; et
- du ou des module(s) d'interface commune 6-1, 6-2 devant être utilisé (s) pour chaque chaîne à péage nécessitant un décryptage.

La partie de la table comportant ces informations d'attribution peut prendre la forme suivante :

| **Table d'attribution TA (partie seulement des informations stockées dans la mémoire non volatile 44) pour n canaux).** | | | |
|---|---|---|---|
| **Canal** | **Démodulateur à utiliser** | **Signal encrypté** | **Module d'interface commune (IC) à utiliser** |
| 1 | No. 1 | oui | IC No. 1 |
| 2 | No. 1 | oui | IC No. 2 |
| 3 | No. 1 | oui | IC No. 1 |
| 4 | No. 2 | oui | IC No. 2 |
| 5 | No. 2 | oui | IC No. 1 |
| 6 | No. 2 | oui | IC No. 2 |
| · | | | |
| · | | | |
| n | No. 2 | non | -- |

La convention qui suit désigne les démodulateurs 12-1 et 12-2 respectivement démodulateurs No.1 et No.2, et les modules 6-1 et 6-2 respectivement modules d'interface commune No.1 et No.2. Chaque module de décryptage correspond à une voie indépendante de démodulation d'une entrée-source respective de réception d'un signal numérique externe. Cette indépendance des voies de démodulation permet notamment de recevoir et traiter en même temps deux chaînes de deux multiplexes différents.

L'entrée des différents démodulateurs 12-1, 12-2, selon la nature de ces démodulateurs peut être une même source de présentation de signal de télévision numérique, par exemple une antenne terrestre ou un câble, ou bien ces entrées peuvent provenir de sources de présentation différente (parabole/parabole, parabole/cable, parabole/terrestre, cable/terrestre). Dans le premier cas, on peut prévoir entre la source et les démodulateurs un répartiteur ou distributeur de signaux (non représenté) pour alimenter en parallèle leur entrée respective. L'entrée des deux différents modules de décryptage 6-1, 6-2 peut aussi être des sources différentes, selon l'application envisagée.

Dans la table. TA précitée, le démodulateur à utiliser est précisé par rapport à une fonction préétablie (indiquée ailleurs), par exemple pour le signal destiné à une incrustation d'image.

Les informations extraites de cette table TA sont utilisées pour commander l'aiguillage des signaux à travers le réseau de transport 38 de manière à assurer : i) que les démultiplexeurs 18 reçoivent, pour un canal donné, le signal du démodulateur attribué à ce canal, et ii) lorsque le signal est encrypté, que ce signal est traité par le module d'interface commune attribué à ce canal pour réaliser le décryptage. Par exemple, la table indique au microprocesseur 24 que lorsque l'utilisateur choisit le canal 2 pour une incrustation d'image, le signal de ce canal doit être extrait du démodulateur No.1, qu'il est encrypté, et que le décryptage doit être assuré par le module d'interface commune No.1. Ces informations sont traduites en commandes pour assurer au niveau du réseau de transport 38 une ligne de communication passant du démodulateur No.1 au module d'interface No.1 et, de là, à l'une des entrées (TS1) des démultiplexeurs 18. En parallèle, et de manière analogue, la table permet implicitement ou explicitement d'informer le microprocesseur 24 d'établir un chemin de l'autre démodulateur (No.2) 12-2 vers l'autre entrée TS2, éventuellement via un module d'interface commune, pour présenter l'image principale sur l'écran. Ce chemin est exprimé en commandes correspondantes vers le réseau de transport 38, de sorte que ce dernier assure séparément et simultanément deux liens entre chacun des deux démodulateurs et son entrée respective sur les démultiplexeurs.

La table TA peut comprendre en outre un répertoire des chaînes qui compose chacun des multiplexes gérés. Cela permet d'analyser une demande nécessitant le traitement de deux chaînes en simultané, par exemple pour déterminer de :
- l'utilisation des deux voies de démultiplexage, si ces deux chaînes ne sont pas contenues dans le même multiplex, ou
- l'option de n'utiliser qu'une seule voie de démultiplexage, si ces deux chaînes se trouvent être contenues dans le même multiplex. Bien entendu, il peut aussi être envisagé dans ce cas de commander aux deux modules de décryptage 6-1, 6-2 de fonctionner sur le même multiplex, chacun étant commandé pour décrypter l'une des deux chaînes respectives à décoder.

Afin de permettre le routage entre les noeuds constitués par les démodulateurs No. 1 et No. 2, les modules d'interface commune No.1 et No.2, et les démultiplexeurs 18, le réseau de transport comporte un ensemble lignes câblées L1 à L13 et quatre commutateurs multipolaires C1 à C4. Ces commutateurs comprennent une sortie et deux ou trois entrées dans le sens du flux des données. Ils peuvent être réalisés par des multiplexeurs dont l'entrée de sélection reçoit un signal logique en fonction des commandes issues du microprocesseur 24.

La topographie des lignes et des commutateurs, qui constituent les moyens de routage, se présente comme suit :
- un premier commutateur C1 assure l'aiguillage des entrées de données vers le module d'interface commune No.1 (via le connecteur PCCard 42-1) sélectivement depuis les démodulateurs No. 1 et No. 2, sur des lignes respectives L1 et L2 ;
- un deuxième commutateur C2 assure l'aiguillage des entrées de données vers le module d'interface commune No.2 (via le connecteur PCCard 42-2) sélectivement depuis les démodulateurs No.1 et No.2, sur des lignes respectives L3 et L4, ainsi qu'une entrée vers ce module d'interface depuis la sortie du module d'interface commune No.1, via la ligne L5. Cette ligne L5 constitue un lien de concaténation entre les modules 6-1 et 6-2 qui positionne le module d'interface commune No. 2 en aval du module d'interface commune No.1 dans le flux allant de démodulateur aux démultiplexeurs, et correspond à ce titre à la liaison référencée 32-c à la figure 2 ;
- un troisième commutateur C3 assure l'aiguillage des signaux vers une première entrée TS1 des démultiplexeurs 18, ces signaux provenant sélectivement : directement du démodulateur No. 1 (ligne L6) pour des signaux non encryptés (par exemple le canal n dans la table TA), du module d'interface commune No. 1 (lignes L5, L8), et du module d'interface commune No. 2 (lignes L9, L10) ; et
- un quatrième commutateur C4 assure l'aiguillage des signaux vers une seconde entrée TS2 des démultiplexeurs 18, ces signaux provenant sélectivement : directement du démodulateur No.2 (ligne L7), du module d'interface commune No.1 (lignes L5, L11), et du module d'interface commune No.2 (lignes L9, L12).

Par ailleurs, il est prévu un lien de concaténation entre les modules 6-1 et 6-2 inverse de celle créée par le lien L5, qui positionne le module d'interface commune No. 1 en aval du module d'interface commune No. 2 dans le flux allant de démodulateur aux démultiplexeurs. Cette concaténation inverse est réalisée par le lien L9 en sortie du module d'interface commune No. 2, repris par le lien L13 qui aboutit à l'un des poles fixes du commutateurs C1 qui alimente l'entrée du module d'interface commune No. 1.

Le fait de permettre de traverser la concaténation des modules d'interface commune No. 1 et No. 2 au choix dans un sens ou l'autre est avantageux, car il permet de changer le contexte de fonctionnement en inter-agissant le moins possible sur le flux en cours de décryptage

On comprend que la topographie du réseau de transport 38 permet de faire transiter les signaux de l'un ou l'autre des démodulateurs 12-1, 12-2 vers une entrée TS1 ou TS2 des démultiplexeurs 18, et ce sélectivement soit par voie directe, soit via le module de commande d'interface No.1, soit via le module de commande d'interface No.2. Cette flexibilité totale permet ainsi de reproduire tous les cas de figure présentés à la table supra et, de manière plus générale, toutes les possibilités de traitement, simultanément ou individuellement, des signaux issus des deux démodulateurs 12-1, 12-2. Lorsque les signaux des deux démodulateurs sont traités simultanément, le réseau de transport 38 peut assurer les trajets nécessaires de leurs données respectives de manière complètement indépendante, permettant aux démultiplexeurs de recevoir ces deux signaux sur leurs entrées respectives, sous forme convenablement décryptée s'ils ont été encryptés à la source.

A titre indicatif, il sera présenté deux cas de figure de fonctionnement d'un téléviseur faisant appel à l'un des démodulateurs 12-1 et 12-2, ou aux deux simultanément, au moyen de l'ensemble hôte 4 et des modules d'interface commune 6-1 et 6-2, grâce au réseau de transport 38 selon l'architecture de la figure 3.
1. Situation de départ : le téléviseur est en mode de réception d'un canal i lorsque l'utilisateur sélectionne par sa télécommande 28 un autre canal k. En réponse, le microprocesseur 24 de l'hôte 4 analyse la table TA et charge, entre autres, les informations concernant : i) le démodulateur par lequel les signaux du canal k doivent être traités, et ii) le module d'interface commune à utiliser pour l'éventuel décryptage de ce signal. Par exemple, si k = 3, la table indique alors que les signaux doivent être extraits du démodulateur No.1 et doivent être décryptés par le module d'interface commune No.1 avant d'être transportés aux démultiplexeurs 18.

Cas 1.1 : les signaux des canaux i et k sont attribués à des démodulateurs différents, du fait qu'ils sont contenus dans des multiplexes différents, et à des modules d'interface différents. Si le démodulateur par lequel le signal du canal k doit être extrait est par exemple le démodulateur No.1 (alors que celui utilisé pour le canal i en cours est le démodulateur No.2), le microprocesseur 24 commandera aux commutateurs C1-C4 du réseau de transport 38 de créer, pour le canal k, une liaison du démodulateur No.1 vers le module d'interface commune disponible prévu pour traiter ce signal (par exemple le module No. 1), puis de ce module vers celle des entrée des démultiplexeurs 18 (par exemple TS2) qui n'est pas utilisée pour recevoir les signaux du canal i précité. Dans ce cas de figure, les signaux de chacun des deux canaux i et k sont décryptés respectivement par le module d'interface commune No.2 et No.1.

Ce routage s'effectue après que le microprocesseur ait appliqué les procédures d'activation du nouveau module disponible (module No.1) conformément à la norme "Common Interface" précitée, permettant la visualisation du canal k. De la sorte, les démultiplexeurs recevront par le réseau de transport 38 les signaux correctement démodulés et décryptés pour chacun de ces deux canaux i et k, permettant une incrustation d'image, et/ou l'enregistrement de l'un et la visualisation simultanée de l'autre dans un appareil du type "combo", et ce sans que l'utilisateur ait à se soucier de savoir si les canaux i et k appartiennent ou pas à même multiplex.

Cas 1.2 : les signaux des canaux i et k sont attribués à un même démodulateur, appartenant à un même multiplex, mais sont attribués à des modules d'interface mutuellement différents pour leur décryptage. Dans ce cas, le microprocesseur 24 commandera aux commutateurs C1-C4 du réseau de transport 38 de créer, pour le canal k, une liaison par exemple du démodulateur No. 1 (soit le même que pour le canal i) passant d'abord vers le module d'interface utilisé pour le canal en cours i. Ce dernier agit alors en tant que courroie de transmission pour transmettre, via la ligne L5, les signaux du canal k à l'entrée du module d'interface commune No. 2 à utiliser pour ce canal (qui est celui utilisé pour le canal i). Les signaux de canal k sont ainsi décodés par le module d'interface commune No.2, conformément à la table TA, et transmis décryptés de ce dernier vers l'entrée disponible TS2 des multiplexeurs. Ce routage s'effectue après que le microprocesseur 24 ait appliqué les procédures d'activation du nouveau module disponible (module No.2) conformément à la norme "Common Interface" précitée, permettant la visualisation du canal k.

On note que le réseau de routage 38 permet d'inverser l'ordre de la concaténation (liens L9 et L13), en faisant transiter un signal à destination du module d'interface commune No.1 d'abord par le module d'interface commune No.2.

Au niveau de l'utilisateur, le résultat de routage est transparent.

Dans un cas (1.1) comme dans l'autre (1.2), l'utilisateur n'a pas besoin de connaître ni, le démodulateur, ni le multiplex, ni le module d'interface commune affectés à chacun des canaux en cours de visualisation ou de traitement, la gestion des attributions de ces unités étant assurée pleinement par le microprocesseur 24 de l'hôte qui commande le routage par les commutateurs C1-C4 du réseau de transport 38 par référence à la table TA stockée dans la mémoire non volatile 44.

L'exemple donné porte sur seulement deux démodulateurs différents et deux modules d'interface commune différents par souci de simplification. Il est cependant clair que le principe de l'invention peut accommoder un nombre arbitraire supérieur à un de démodulateurs et de modules d'interface commune, et que l'homme du métier pourra aisément adapter le réseau de transport 38 du mode de réalisation décrit pour aiguiller les signaux provenant d'un nombre d de démodulateurs sélectivement vers un nombre x d'entrées de démultiplexage via un module ou plus d'interface commune parmi un nombre m de tels modules, où d, x et m sont des entiers égaux ou supérieurs à 2.

En effet, ces enseignements peuvent être mis en oeuvre dans des systèmes de réception complexes permettant des combinaison de: l'incrustation d'image, l'enregistrement d'une ou de plusieurs autre(s) chaîne(s) non visualisée(s) en temps réel, et/ou la distribution de signaux démodulés vers différentes sources d'exploitation, par exemple au sein d'un bâtiment.

## Revendications

1. Dispositif de routage (38) destiné au transport de données vidéo numériques provenant de signaux de télévision numérique démodulés, ledit dispositif comprenant un réseau (L1-L13, C1-C4) assurant le routage desdites données vers des moyens de démultiplexage (18) via au moins un module de décryptage (6-1, 6-2),
**caractérisé en ce que** le réseau comprend des moyens de connexion à une pluralité de voies indépendantes de démodulation, chacune produisant des données numériques d'un démodulateur respectif (12-1, 12-2), le réseau permettant d'assurer individuellement un routage de données numériques issues de chaque voie de démodulation vers les moyens de démultiplexage (18) via au moins un module de décryptage (6-1, 6-2).

2. Dispositif selon la revendication 1, **caractérisé en ce qu'**il est destiné à se relier à plusieurs modules de décryptage (6-1, 6-2) et **en ce que** ledit réseau comprend des moyens de connexion (C1, C2) permettant de relier l'une quelconque des voies de démodulation (12-1, 12-2) vers l'un quelconque des modules de décryptage.

3. Dispositif selon la revendication 1 ou 2, **caractérisé en ce qu'**il gère une pluralité de modules de décryptage (6-1, 6-2), et **en ce que** ledit réseau comprend des moyens de connexion (L5, L9, L13, C2, C1) pour assurer un routage des signaux numériques en passant par plusieurs modules de décryptage successifs (6-1, 6-2) selon un ordre arbitraire.

4. Dispositif selon l'une quelconque des revendications 1 à 3, **caractérisé en ce qu'**il gère une pluralité de modules de décryptage (6-1, 6-2) reliés entre eux en chaîne, et **en ce que** ledit réseau comprend des moyens de connexion (L5, L9, L13, C2, C1) permettant de sélectionner, pour au moins deux de ces modules de décryptage (6-1, 6-2), le sens de cheminement de données numériques dans ladite chaîne.

5. Dispositif selon l'une quelconque des revendications 1 à 4, **caractérisé en ce que** le réseau (L1-L13, C1-C4) comprend des moyens de connexion destinés à se relier à une pluralité d'entrées de données (TS1, TS2) des moyens de démultiplexage (18), chacune pouvant recevoir indépendamment des données ayant pour origine l'une quelconque des voies de démodulation (12-1, 12-2).

6. Dispositif selon l'une quelconque des revendications 1 à 5, **caractérisé en ce qu'**il exécute les routages en réponse à des commandes provenant d'un dispositif hôte (4) assurant la gestion de la démodulation des signaux numériques, du décryptage des données numériques et du démultiplexage des données.

7. Dispositif hôte (4) pour la gestion en réception de signaux de télévision numérique, ledit dispositif étant associé à au moins un module de décryptage (6-1, 6-2),
**caractérisé en ce qu'**il comprend :
- un dispositif de routage (38) selon l'une quelconque des revendications 1 à 6,
- au moins deux voies indépendantes de démodulation (12-1, 12-2) reliées fonctionnellement au dispositif de routage pour fournir indépendamment des données numériques démodulées issues de canaux respectifs, et
- un processeur (24) permettant d'attribuer chaque canal à une voie de démodulation respective(12-1, 12-2) et à au moins un module de décryptage (6-1, 6-2) et pour commander au dispositif de routage le routage des données de chaque canal depuis la voie de démodulation attribuée vers le ou chaque module de décryptage attribué et vers une entrée (TS1, TS2) des moyens de démultiplexage (18).

8. Dispositif selon la revendication 7, **caractérisé en ce qu'**il comprend en outre une table d'attribution (TA) stockée en mémoire (44) permettant d'identifier, pour chaque canal répertorié : i) le ou les voies de démodulation (12-1, 12-2) à attribuer et ii) le ou les modules de décryptage (6-1, 6-2) à attribuer.

9. Dispositif selon la revendication 7 ou 8, **caractérisé en ce qu'**il gère simultanément des signaux provenant d'au moins deux canaux actifs, chaque canal étant traité par une voie de démodulation respective (12-1, 12-2), les données démodulées de chaque canal étant fournies simultanément à des entrées respectives (TS1, TS2) des moyens de démultiplexage (18).

10. Dispositif selon l'une quelconque des revendications 7 à 9, **caractérisé en ce que** lesdits au moins deux canaux actifs sont issus de multiplexes de transmission de signaux de télévision numérique mutuellement différents.

11. Dispositif selon l'une quelconque des revendications 7 à 10, **caractérisé en ce qu'**au moins un module de décryptage est un module dit "d'interface commune" répondant à une norme établie de la télévision numérique.

12. Dispositif selon l'une quelconque des revendications 1 à 11, **caractérisé en ce qu'**il comprend des moyens (4) pour gérer plusieurs entrées de voies de démodulation indépendantes, provenant de multiplexes respectifs, en mode simultanée.

13. Récepteur de signaux de télévision numérique comprenant un téléviseur combiné avec un enregistreur, permettant simultanément de reproduire sur écran des signaux provenant d'un canal et d'enregistrer des signaux provenant d'un autre canal, **caractérisé en ce qu'**il comprend un dispositif hôte (4) selon l'une quelconque des revendications 7 à 12.

14. Récepteur de signaux de télévision numérique ayant une fonction d'incrustation d'image selon laquelle deux images provenant de canaux différents peuvent être affichées simultanément, **caractérisé en ce qu'**il comprend un dispositif hôte (4) selon l'une quelconque des revendications 7 à 12.

15. Procédé de routage (38) destiné au transport de données vidéo numériques provenant de signaux de télévision numérique démodulés, ledit procédé mettant en oeuvre un réseau (L1-L13, C1-C4) assurant le routage desdites données vers des moyens de démultiplexage (18) via au moins un module de décryptage (6-1, 6-2),
**caractérisé en ce qu'**il consiste à relier les moyens de connexion à une pluralité de voies indépendantes de démodulation, chacune produisant des données numériques d'un démodulateur respectif (12-1, 12-2), et à assurer individuellement un routage de données numériques issues de chaque voie de démodulation vers les moyens de démultiplexage (18) via au moins un module de décryptage (6-1, 6-2).

16. Procédé selon la revendication 15, **caractérisé en ce qu'**il consiste à prévoir plusieurs modules de décryptage (6-1, 6-2), et à relier l'une quelconque des voies de démodulation (12-1, 12-2) vers l'un quelconque des modules de décryptage.

17. Procédé selon la revendication 15 ou 16, **caractérisé en ce qu'**il consiste à gérer une pluralité de modules de décryptage (6-1, 6-2) et à assurer un routage des données numériques en passant par plusieurs modules successifs (6-1, 6-2) selon un ordre pouvant être sélectionné lors de la gestion.

18. Procédé selon l'une quelconque des revendications 15 à 17, **caractérisé en ce qu'**il consiste à gérer une pluralité de modules de décryptage (6-1, 6-2) reliés entre eux en chaîne, et à prévoir, pour au moins deux de ces modules de décryptage (6-1, 6-2), une sélection du sens de cheminement de données numériques dans ladite chaîne.

19. Procédé selon l'une quelconque des revendications 15 à 18, **caractérisé en ce qu'**il consiste à assurer une liaison à une pluralité d'entrées de données démodulées (TS1, TS2) des moyens de démultiplexage (18), chacune recevant indépendamment des données de l'une de la pluralité de voies indépendantes de démodulation (12-1, 12-2) de données numériques.

20. Procédé selon l'une quelconque des revendications 15 à 19, **caractérisé en ce qu'**il exécute les routages en réponse de commandes provenant d'un dispositif hôte (4) assurant la gestion de la démodulation des signaux numériques, du décryptage des données numériques démodulées et le démultiplexage des données.

21. Procédé selon l'une quelconque des revendications 15 à 20, **caractérisé en ce qu'**il consiste à gérer plusieurs entrées de voies de démodulation indépendantes, provenant de multiplexes respectifs, en mode simultanée.

22. Mise en oeuvre du procédé selon l'une quelconque des revendications 15 à 21 pour la gestion simultanée d'au moins un premier et un deuxième canal de signaux de télévision numérique modulés, les données du premier canal étant destinées à l'affichage sur écran d'une image principale, les données du deuxième canal étant destinées à l'affichage d'une image en incrustation sur l'image principale.

23. Mise en oeuvre du procédé selon l'une quelconque des revendications 15 à 21 pour la gestion simultanée d'au moins un premier et un deuxième canal de signaux de télévision numérique modulés, les données du premier canal étant destinées à l'affichage en temps réel sur écran, les données du deuxième canal étant destinées à un enregistrement sur support d'enregistrement.

24. Mise en oeuvre du procédé selon l'une quelconque des revendications 15 à 21, pour la gestion simultanée d'au moins un premier et un deuxième canal de signaux de télévision numérique modulés, les premier et deuxième canaux de données numériques appartenant à des multiplexes de transmission de signaux de télévision numérique mutuellement différents.
